# FASCICULE DE BREVET EUROPEEN

(11) **EP 2 331 316 B1**
(45) Date de publication et mention de la délivrance du brevet: **11.07.2012**
(21) Numéro de dépôt: 09784306.4
(22) Date de dépôt: 27.07.2009
(51) Int. Cl.: B29C 63/08, F16L 11/08

(54) **MÉTHODE ET INSTALLATION DE CONSTRUCTION D'UNE COUCHE DE FILS D'ARMURE**
VERFAHREN UND ANLAGE ZUR HERSTELLUNG EINER LAGE AUS BEWEHRUNGSSTREIFEN
METHOD AND INSTALLATION FOR CONSTRUCTING A LAYER OF ARMOUR STRIPS

(30) Priorité: 28.07.2008 FR 0804293
(43) Date de publication de la demande: 15.06.2011
(73) Titulaire: Technip France, 92400 Courbevoie (FR)
(72) Inventeur: ROCHE, Fabien, F-76000 Rouen (FR); PIRONIN, Guillaume, F-76190 Baons le Comte (FR); DESBAZEILLE, Etienne, F - 76490 Saint Arnoult (FR)
(74) Mandataire: Bertrand, Didier
(86) Numéro de dépôt international: PCT/FR2009/000931
(87) Numéro de publication internationale: WO 2010/012897

(56) Documents cités:
- FR-A- 2 873 952
- FR-A- 2 877 069
- US-A1- 2008 145 583

## Description

La présente invention se rapporte à une méthode et une installation de construction d'une couche de fils d'armure autour d'un noyau tubulaire d'une conduite flexible pour le transport des hydrocarbures.

Les conduites flexibles concernées sont ici les conduites pétrolières du type non lié, telles que décrites dans les documents normatifs API17J et API RP 17B publiés par l'American Petroleum Institute. Ces conduites comprennent usuellement, de l'intérieur vers l'extérieur, une carcasse interne, une gaine interne d'étanchéité, une voûte de pression, plusieurs nappes d'armures de traction et une gaine de protection externe.

La carcasse interne a pour fonction principale la reprise des efforts radiaux d'écrasement, par exemple ceux liés à la pression hydrostatique. Elle est réalisée à partir d'un feuillard profilé et enroulé pour agrafer ensemble des spires jointives dudit feuillard. La gaine interne d'étanchéité qui la recouvre est le plus souvent extrudée en matière plastique directement sur la carcasse. Cette gaine a pour fonction le confinement du fluide circulant dans le conduite. Quant à la voûte de pression, elle est formée généralement d'un fil de forme métallique enroulé en spires jointives autour de la gaine interne d'étanchéité. Elle permet ainsi de reprendre les efforts radiaux liés à la pression du fluide circulant dans la conduite. Les nappes d'armure de traction ont pour fonction la reprise des efforts de traction qui s'exercent sur la conduite. Ces nappes sont constituées de fils d'armure enroulés hélicoïdalement à pas long autour de la voûte de pression. Les angles d'hélice de ces nappes, exprimés en valeur absolue, sont inférieurs à 60° et plus généralement inférieurs à 55°. Afin d'équilibrer la structure en torsion, le nombre total de nappes d'armure de traction est généralement pair et les nappes sont croisées en elles. Ces fils d'armure sont usuellement de section rectangulaire, et ils présentent ainsi deux faces opposées sensiblement parallèles entre elles et respectivement deux flancs latéraux opposés l'un de l'autre. Les faces correspondent aux deux cotés de plus grande longueur du rectangle. La face dite interne est en appui sur le noyau tubulaire situé à l'intérieur de la nappe d'armure concernée.

US-A-2008/0145583 décrit une méthode de construction d'une couche de fils d'armure autour d'un noyau tubulaire d'une conduite flexible destinée au transports des hydrocarbures, dans laquelle des fils d'armure présentant respectivement deux faces opposées sensiblement parallèles sont enroulés hélicoïdalement autour du noyau tubulaire.

FR-A-2873952 décrit une installation de construction d'une couche de fils d'armures autour d'un noyau tubulaire d'une conduite, ledit noyau tubulaire s'étendant longitudinalement selon un axe de symétrie, ladite installation comprenant une roue support présentant un évidement central pour autoriser le passage dudit noyau tubulaire à travers ladite roue, ladite roue comprenant des moyens de stockage pour stocker une pluralité de fils d'armure présentant respectivement deux faces opposées sensiblement parallèles, et une pluralité de paires d'organes de guidage montés autour dudit évidement central, lesdites paires d'organes de guidage comportant respectivement des organes de guidage amont et des organes de guidage aval, chaque fil d'armure étant destiné à être étendu entre lesdits organes de guidage amont et lesdits organes de guidage aval de manière à entrer selon une direction d'entrée à travers lesdits organes de guidage aval, lesdits organes de guidage amont et aval étant décalés angulairement les uns par rapport aux autres pour permettre de torsader le fil d'armure, ledit noyau tubulaire et ladite roue étant destinés à être entraînés simultanément, ledit noyau tubulaire à travers ledit évidement central et ladite roue en rotation autour dudit noyau tubulaire de manière à enrouler hélicoïdalement lesdits fils d'armure sur ledit noyau, tandis que chacun desdits fils d'armure est entraîné en translation à travers lesdits organes de guidage, lesdits fils d'armure s'étendant respectivement entre les organes de guidage aval et ledit noyau tubulaire selon une direction de sortie desdits organes de guidage aval en provoquant la flexion plane dudit fil d'armure, ladite direction de sortie étant inclinée par rapport à un plan axial contenant ledit axe de symétrie dudit noyau tubulaire et coupant lesdits organes de guidage aval.

La difficulté réside dans la mise en oeuvre d'une pluralité de fils d'armure, pour les enrouler ensemble autour de la voûte de pression qui forme un noyau tubulaire avec les couches internes qu'elle comporte. Et précisément, il convient d'enrouler ces fils d'armure et de les ajuster les uns par rapport aux autres, flanc contre flanc, de telle sorte que leur face interne soit en appui stable sur le noyau tubulaire, avec le moins de contraintes résiduelles possibles, pour éviter ensuite une déformation de la nappe d'armure et un gonflement de cette nappe dans des conditions particulières de mise en oeuvre de la conduite flexible.

Aussi, un problème qui se pose et que vise à résoudre la présente invention est alors de fournir une méthode de construction d'une couche de fils d'armure, autour d'un noyau tubulaire, qui permette d'obtenir une parfaite stabilité des fils d'armure de ladite couche lors de la mise en oeuvre de la conduite flexible.

Dans le but de résoudre ce problème, et selon un premier objet, la présente invention propose une méthode de construction d'une couche de fils d'armures autour d'un noyau tubulaire d'une conduite flexible destinée au transport des hydrocarbures. Selon l'invention, la méthode comprend les étapes suivantes. On fournit tout d'abord un noyau tubulaire de conduite flexible, ledit noyau tubulaire s'étendant longitudinalement selon un axe de symétrie, et on fournit une pluralité de fils d'armure présentant respectivement deux faces opposées sensiblement parallèles ; on fournit également une pluralité de paires d'organes de guidage comportant respectivement des organes de guidage amont et des organes de guidage aval réglables, chaque fil d'armure étant destiné à être étendu entre lesdits organes de guidage amont et lesdits organes de guidage aval réglables de manière à entrer selon une direction d'entrée R à travers lesdits organes de guidage aval, lesdits organes de guidage amont et aval étant décalés angulairement les uns par rapport aux autres pour permettre de torsader le fil d'armure (32, 34) ; on entraîne alors en rotation selon un sens de rotation V ladite pluralité de fils d'armure et ladite pluralité de paires d'organes de guidage autour dudit noyau tubulaire et on entraîne simultanément ledit noyau tubulaire en translation de manière à enrouler hélicoïdalement lesdits fils d'armure sur ledit noyau, tandis que chacun desdits fils d'armure est entraîné en translation à travers lesdits organes de guidage, lesdits fils d'armure s'étendant respectivement entre les organes de guidage aval et ledit noyau tubulaire selon une direction de sortie S desdits organes de guidage aval en provoquant la flexion plane dudit fil d'armure; ladite direction de sortie S étant inclinée par rapport à un plan axial contenant ledit axe de symétrie dudit noyau tubulaire et coupant lesdits organes de guidage aval ; et enfin, on règle lesdits organes de guidage aval réglables de façon que les deux faces opposées du fil d'armure entrant et sortant desdits organes de guidage aval soient décalés angulairement par rapport audit plan axial selon ledit sens de rotation V, d'un angle supérieur à 90° pour pouvoir appliquer ledit fil d'armure à plat sur ledit noyau tubulaire.

Ainsi, une caractéristique de l'invention réside dans l'ajustement des organes de guidage aval, à partir desquels le fil d'armure est fléchi pour rejoindre le noyau tubulaire et s'enrouler autour, de telle sorte que ce fil d'armure soit essentiellement fléchi dans un plan perpendiculaire aux deux faces opposées du fil d'armure. De la sorte, le fil d'armure est fléchi de manière continue selon un rayon de courbure déterminé sans subir de fléchissement significatif selon un plan parallèle aux deux faces opposées. Ainsi, le fil d'armure subit une première déformation plastique en torsion, et une seconde déformation plastique en fléchissement, ce qui permet un parfait enroulement en hélice du fil d'armure contre le noyau tubulaire selon un cercle osculateur de rayon déterminé. De la sorte, la face interne du fil d'armure présente sur toute la longueur de la conduite une géométrie cylindrique épousant parfaitement le noyau tubulaire, ce qui permet de réduire les pressions de contact et les contraintes mécaniques endurées en service, si bien que la durée de vie de la conduite est augmentée.

Si les précautions ne sont pas prises pour limiter le fléchissement du fil d'armure selon une composante comprise dans un plan parallèle aux faces opposées et perpendiculaire aux flancs du fil, alors, les fils d'armure ne viennent pas s'appliquer à plat sur le noyau tubulaire. Mais, l'un des bords du fil d'armure est en contact avec le noyau tubulaire, tandis que son bord opposé est libre et espacé du noyau tubulaire, ce qui a pour inconvénient de réduire la surface de contact entre le fils d'armure et le noyau tubulaire, et donc de générer des concentrations de contraintes mécaniques.

En outre, il convient d'imprimer une déformation plastique en fléchissement du fil d'armure selon un rayon de courbure inférieure au rayon du cercle osculateur, de manière à ce que le fil d'armure tende à enserrer le noyau tubulaire. Le rayon du cercle osculateur est bien évidemment directement lié au rayon du noyau tubulaire et à l'angle d'enroulement du fil d'armure par rapport à l'axe du noyau tubulaire comme on expliquera ci-après. De la sorte, la nappe d'armure de traction est stable et n'a pas tendance à gonfler violemment comme un ressort lorsqu'elle est libre de la faire. Cette instabilité est liée à une plastification en flexion plane insuffisante des fils d'armure, laquelle est associée à un taux excessif de contraintes résiduelles. Ce phénomène doit être évité car il peut poser un problème de sécurité lors des opérations de montage des embouts d'extrémité. Cependant, ce phénomène n'a pas d'influence significative sur la tenue en service de la conduite flexible, car ces contraintes résiduelles décroissent fortement lors du test de pression effectué à pression interne élevée avant la mise en service de ladite conduite.

Selon un mode de mise en oeuvre de l'invention particulièrement avantageux, lesdites directions d'entrée et de sortie définissant un plan de flexion Pf, on règle lesdits organes de guidage aval réglables de façon que les deux faces opposées du fil d'armure entrant et sortant desdits organes de guidage aval soient décalés angulairement par rapport audit plan de flexion selon ledit sens de rotation V, d'un angle supérieur ou égal à 90°, par exemple supérieur à 95°.

De la sorte, le fil d'armure est fléchi uniquement selon une composante comprise dans le plan perpendiculaire à ses deux faces opposées ce qui permet une meilleure application à plat du fil sur le noyau tubulaire. A première vue, un tel fléchissement devrait pouvoir être obtenu en réglant lesdits organes de guidage aval de façon que les deux faces opposées du fil d'armure entrant et sortant soient décalés angulairement par rapport au plan de flexion, d'un angle égal à 90°. Mais cela n'est pas le cas, car le fil d'armure en sortie des organes de guidage aval présente une torsion de telle sorte que les contraintes de fléchissement qu'il subit ne s'appliquent pas avec la même intensité sur toute sa largeur.

Par ailleurs, on fournit en outre des moyens de réglage desdits organes de guidage aval, comme on l'expliquera en détail ci-après, permettant de les régler en cours de mise en oeuvre du procédé.

Avantageusement, on guide ledit fil d'armure à travers lesdits organes de guidage aval entre deux premières surfaces de déformation opposées et mobiles afin de diminuer les forces de frottement exercées sur les fils d'armure. Pour les mêmes raisons, on guide préférentiellement ledit fil d'armure à travers lesdits organes de guidage amont entre deux secondes surfaces de déformation opposées, mobiles également. Selon un mode de réalisation particulièrement avantageux, les surfaces de déformation précitées sont circulaires. Pour ce faire, lesdits organes de guidage aval comportent avantageusement une première paire de premiers galets montés à rotation, lesdits premiers galets présentant des axes de rotation parallèles entre eux et des premières bandes de roulement en regard. Ledit fil d'armure est alors destiné à être entraîné en translation entre lesdits premiers galets, lesdites premières bandes de roulement respectivement en appui contre lesdites faces opposées, de telle sorte que les premiers galets sont entraînés en rotation dans des sens opposés à mesure que le fil d'armure est entraîné entre les deux. On notera que c'est à partir de ces premiers galets que le fil d'armure est entraîné en flexion vers le noyau tubulaire et que par conséquent, l'un de ces premiers galets constitue un élément d'appui sur lequel s'exercent des efforts de renvoi importants pour la flexion comme on l'expliquera plus en détail dans la suite de la description. En outre, lesdits organes de guidage amont comportent préférentiellement, une seconde paire de seconds galets montés également à rotation. Lesdits seconds galets présentant des axes de rotation parallèles et des secondes bandes de roulement en regard. Là également, ledit fil d'armure est destiné à être entraîné en translation entre lesdits seconds galets, lesdites secondes bandes de roulement respectivement en appui contre lesdites faces opposées. En revanche, on notera ici que le fil d'armure est amené entre les seconds galets dans une direction sensiblement confondue avec celle du fil d'armure étendue entre les organes de guidage aval et les organes de guidage amont. Aussi, les efforts qui s'exercent alors sur ces seconds galets, sont sensiblement équivalents, et bien moindre que les efforts de renvoi précités qui s'exercent sur l'un des premiers galets de la première paire de galets.

Selon un mode de réalisation de l'invention particulièrement avantageux, on maintient les organes de guidage de ladite pluralité d'organes de guidage en position fixe les uns par rapport aux autres et espacés les un des autres autour dudit noyau tubulaire. Ainsi, chaque fil d'armure de la pluralité de fils d'armure, est guidé à travers les organes de guidage sans que les fils d'armure ne soient amenés à se croiser. Ils viennent simplement s'ajuster bord à bord sur le noyau tubulaire. Préférentiellement, on monte lesdits organes de guidage amont et aval mobiles en rotation les uns par rapport aux autres autour d'un même axe de rotation de manière à pouvoir imposer une contrainte de torsion au fil d'armure, en fonction du décalage angulaire entre les deux organes de guidage. Bien évidemment, ces organes de guidage sont susceptibles d'être maintenus en position fixe les uns par rapport aux autres pour imposer une torsion déterminée. Selon un mode de réalisation particulier, on ajuste lesdits organes de guidage amont et aval de façon que ledit même axe de rotation soit orienté sensiblement parallèlement audit noyau tubulaire. Par ailleurs, et de manière particulièrement avantageuse, on incline lesdites premières surfaces de déformation perpendiculairement audit plan de flexion qui contient ledit axe de rotation et s'étend tangentiellement audit noyau tubulaire, car en effet, les fils d'armure en quittant respectivement leur organe de guidage aval, sont orientés dans une direction qui est non pas celle du centre du noyau tubulaire mais celle de sa périphérie où les fils d'armure viennent s'enrouler. Cette direction est comprise dans le plan de flexion défini par l'axe de rotation précité qui s'étend entre les deux organes de guidage, et la droite coupant cet axe de rotation et venant s'appliquer tangentiellement sur le noyau tubulaire. Ce plan de flexion s'écarte bien évidemment du plan axial de la conduite contenant l'axe de rotation précité.

Selon un second objet, la présente invention propose une installation de construction d'une couche de fils d'armures autour d'un noyau tubulaire d'une conduite flexible destinée au transport des hydrocarbures, ledit noyau tubulaire s'étendant longitudinalement selon son axe de symétrie. Selon l'invention, l'installation comprend une roue support présentant un évidement central pour autoriser le passage dudit noyau tubulaire à travers ladite roue, ladite roue comprenant des moyens de stockage pour stocker une pluralité de fils d'armure présentant respectivement deux faces opposées sensiblement parallèles, et une pluralité de paires d'organes de guidage montés autour dudit évidement central. Lesdites paires d'organes de guidage comportent respectivement des organes de guidage amont et des organes de guidage aval, chaque fil d'armure étant destiné à être étendu entre lesdits organes de guidage amont et lesdits organes de guidage aval de manière à entrer selon une direction d'entrée à travers lesdits organes de guidage aval. Lesdits organes de guidage amont et aval sont décalés angulairement l'un par rapport à l'autre pour permettre de torsader le fil d'armure. Ledit noyau tubulaire et ladite roue sont destinés à être entraînés simultanément, ledit noyau tubulaire à travers ledit évidement central et ladite roue en rotation autour dudit noyau tubulaire selon un sens de rotation V, de manière à enrouler hélicoïdalement lesdits fils d'armure sur ledit noyau, tandis que chacun desdits fils d'armure est entraîné en translation à travers lesdits organes de guidage, lesdits fils d'armure s'étendant respectivement entre les organes de guidage aval et ledit noyau tubulaire selon une direction de sortie desdits organes de guidage aval en provoquant la flexion plane dudit fil d'armure, ladite direction de sortie S étant inclinée par rapport à un plan axial contenant ledit axe de symétrie dudit noyau tubulaire et coupant lesdits organes de guidage aval. Par ailleurs, ladite roue comprend en outre des moyens de réglage desdits organes de guidage aval pour régler lesdits organes de guidage aval de façon que les deux faces opposées du fil d'armure entrant et sortant desdits organes de guidage aval soient décalées angulairement par rapport audit plan axial selon ledit sens de rotation V, d'un angle supérieur à 90° pour pouvoir appliquer ledit fil d'armure à plat sur ledit noyau tubulaire.

Ainsi, une caractéristique de l'invention selon ce second objet, réside dans la mise en oeuvre de moyens de réglage permettant d'ajuster et de maintenir en position les organes de guidage aval, à partir desquels le fil d'armure est fléchi pour rejoindre le noyau tubulaire, dans une position telle que ce fil d'armure puisse être fléchi essentiellement dans un plan perpendiculaire aux deux faces opposées du fil d'armure.

Selon un mode préféré de mise en oeuvre, lesdites directions d'entrée et de sortie définissant un plan de flexion Pf, lesdits moyens de réglage permettent de régler lesdits organes de guidage aval réglables de façon que les deux faces opposées du fil d'armure entrant et sortant desdits organes de guidage aval soient décalés angulairement par rapport audit plan de flexion selon ledit sens de rotation V, d'un angle supérieur ou égal à 90°. En outre, et ainsi qu'on l'expliquera plus en détail dans la suite de la description, lesdits organes de guidage aval comportent avantageusement une première paire de premiers galets, lesdits premiers galets présentant des axes parallèles et des premières bandes de roulement en regard, ledit fil d'armure étant destiné à être entraîné en translation entre lesdits premiers galets, lesdites premières bandes de roulement respectivement en appui contre lesdites faces opposées. De plus, lesdits organes de guidage amont, comportent, préférentiellement, une seconde paire de seconds galets, lesdits seconds galets présentant des axes parallèles et des secondes bandes de roulement en regard, ledit fil d'armure étant destiné à être entraîné en translation entre lesdits seconds galets, lesdites secondes bandes de roulement respectivement en appui contre lesdites faces opposées.

Par ailleurs, et selon un mode de mise en oeuvre particulièrement avantageux, lesdits moyens de réglage comprennent une pièce en U formant étrier, ladite pièce en U présentant deux ailes en regard, l'une desdites ailes présentant un arbre qui s'étend sensiblement perpendiculairement auxdites ailes et à l'opposé de l'autre desdites ailes, ledit arbre étant monté à rotation sur ladite roue autour d'un axe perpendiculaire à ladite roue, tandis que lesdits organes de guidage aval sont montés sur l'autre aile desdites ailes. Ainsi, les organes de guidage aval sont maintenus espacés de la roue support grâce à la pièce en U, et au surplus ils sont réglables en rotation puisque la pièce en U est elle-même montée à rotation sur la roue support autour d'un axe qui coupe perpendiculairement les deux ailes de la pièce en U. Cette dernière présente avantageusement un fond reliant lesdites ailes, ladite une desdites ailes présentant une extrémité libre opposée audit fond, ladite extrémité libre présentant des moyens d'engrènement pour entraîner ladite pièce en U en pivotement autour dudit arbre. De la sorte, en entraînant l'extrémité libre de la pièce en U selon un plan perpendiculaire à l'arbre précité, on entraîne par là même, la pièce en U et les organes de guidage aval. Pour ce faire, lesdits moyens de réglage comprennent en outre une roue dentée montée coaxialement mobile en rotation contre ladite roue support, et ladite roue dentée présente des dents aptes à coopérer avec lesdits moyens d'engrènement de ladite extrémité libre de ladite une desdites ailes. Ainsi, la roue dentée qui est montée réglable en rotation par rapport à la roue support, est apte à être entraînée en rotation par rapport à la roue support pour précisément venir engrener les moyens d'engrènement de l'extrémité libre de l'aile de la pièce en U et partant, entraîner en pivotement cette pièce en U pour provoquer l'entraînement en rotation les organes de guidage aval. Par ailleurs, la roue dentée engrène avantageusement avec toutes les extrémités libres des ailes des pièces en U de ladite pluralité de paires d'organes de guidage disposées sur la roue support, de manière à pouvoir régler simultanément tous les organes de guidage aval. Avantageusement, ladite pièce en U est installée sur ladite roue de façon que ladite extrémité libre soit orientée vers le centre de ladite roue support, tandis que le fond de la pièce en U est orienté à l'opposé du centre et ainsi, la roue dentée est d'une conception relativement simple et elle s'étend entre l'évidement central et les extrémités libres avec lesquels elle engrène.

En outre, ledit arbre présente un prolongement qui traverse ladite une desdites ailes et qui s'étend à l'intérieur de ladite pièce en U vers ladite autre aile, et lesdits organes de guidage amont sont montés à rotation sur ledit prolongement en regard desdits organes de guidage aval de manière à pouvoir être maintenus en position fixe, alors que les organes de guidage aval sont eux entraînés en rotation. De plus, lesdits organes de guidage amont sont équipés d'une couronne dentée montée coaxialement sur ledit prolongement pour pouvoir non seulement maintenir les organes de guidage amont en position fixe par rapport aux organes de guidage aval lorsque ceux-ci sont entraînés en rotation, mais aussi, pour commander l'inclinaison desdits organes de guidage amont indépendamment. Ainsi, l'objet de l'invention est de pouvoir ajuster en rotation les organes de guidage aval afin de contrôler la flexion plane du fil d'armure comme indiqué ci-dessus. Mais grâce aux caractéristiques précitées il est également possible de régler indépendamment l'angle de torsion imprimé au fil d'armure. Pour ce faire, ladite roue support comprend une autre roue dentée montée coaxialement et mobile en rotation sur ladite roue support, ladite autre roue dentée étant adaptée à engrener ladite couronne dentée et aussi, à engrener simultanément la couronne dentée de chaque organe de guidage amont de ladite pluralité d'organes de guidage.

Aussi, ledit arbre et ledit prolongement présente un alésage axial pour former un chemin de passage dudit fil d'armure, lequel chemin de passage traverse également axialement la roue support derrière laquelle sont installés les moyens de stockage. Ainsi qu'on va l'expliquer ci-après, les fils d'armure sont stockés d'un côté de la roue support, et ils la traversent pour venir directement s'engager dans les organes de guidage pour ensuite être enroulés hélicoïdalement sur le noyau tubulaire.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en coupe axiale d'une installation de construction conforme à l'invention;
- la Figure 2 est une vue schématique de face selon la direction II de l'installation représentée sur la Figure 1 ;
- la Figure 3 est une vue schématique de principe et de détail en perspective éclatée d'un élément représenté sur la Figure 2 ;
- la Figure 4 est une vue schématique en coupe axiale du produit obtenu grâce à l'installation représentée sur la Figure 1 ; et,
- la Figure 5 est une vue schématique en perspective de l'élément représenté sur la Figure 3.

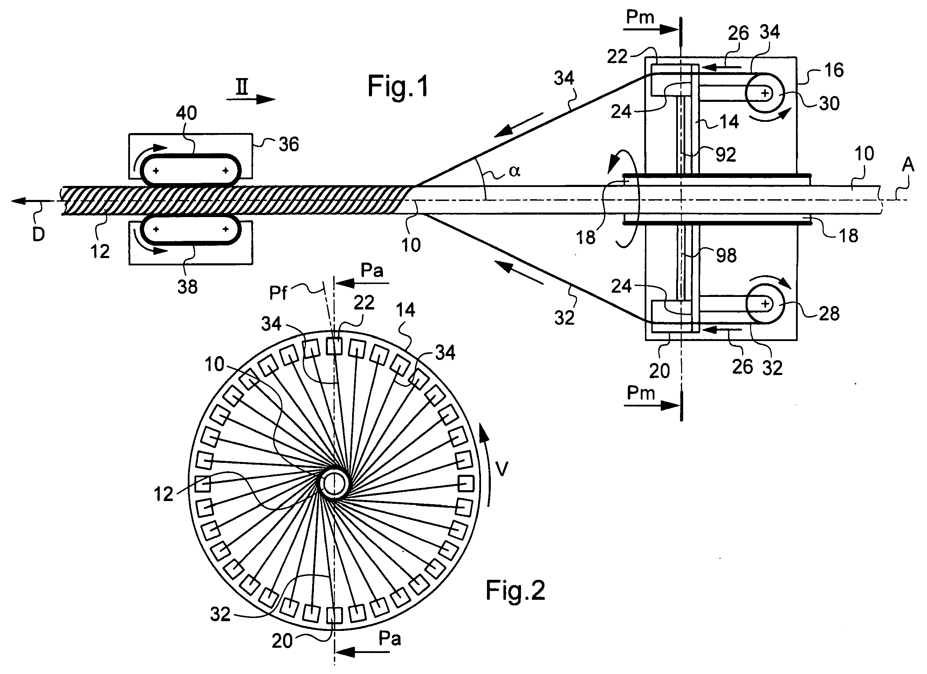

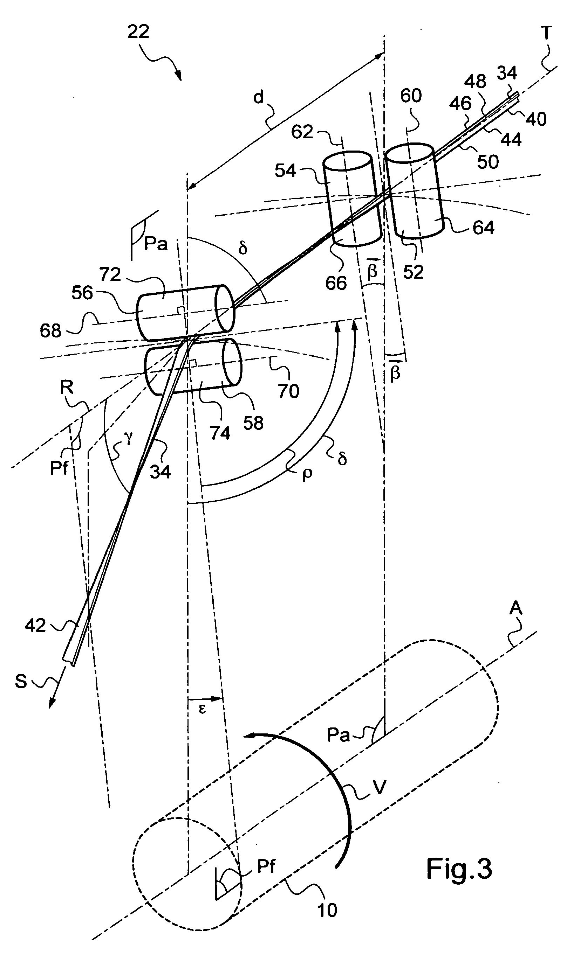

La Figure 1 illustre schématiquement une installation de construction selon l'invention permettant de former, autour d'un noyau tubulaire 10, une nappe ou couche de fils d'armure 12. L'installation comporte une roue support 14 adaptée à être entraînée en rotation autour de son axe de symétrie A, lequel est confondu avec l'axe de symétrie du noyau tubulaire 10. La roue support 14 est logée à l'intérieur d'une cage de protection 16 qui en est solidaire, et elle présente un évidement central 18 à travers lequel s'étend le noyau tubulaire 10. En outre, apparaissent dans la coupe présentée sur la Figure 1, et de manière très schématique, deux paires d'organes de guidage diamétralement opposé 20, 22, installées sur une bordure périphérique avant 24 de la roue support 14 et que l'on détaillera ensuite en référence à la Figure 3. La bordure périphérique avant 24 de la roue support 14 est opposée à une bordure périphérique arrière 26 au regard de laquelle, au droit des paires d'organes de guidage diamétralement opposées 20, 22, sont respectivement installées des bobines 28, 30 de fils d'armure. Ces fils d'armure présentent une section sensiblement rectangulaire et par conséquent, deux faces opposées sensiblement parallèles et deux flancs latéraux opposés. On donnera dans la suite de la description, d'autres informations sur ces fils d'armure. Ainsi, les deux bobines 28, 30 sont aptes à délivrer deux fils d'armure 32, 34, lesquels traversent la roue support 14 au niveau des deux bordures opposées 24, 26 pour déboucher respectivement dans les paires d'organes de guidage diamétralement opposées 20, 22. Ensuite, les fils d'armure 32, 34 rejoignent librement sans guidage particulier, le noyau tubulaire 10 en formant un angle donné α avec l'axe de symétrie A pour former la nappe d'armure 12.

Tout d'abord, la Figure 1 présente dans le plan de coupe, uniquement les deux bobines 28, 30 de fils d'armure 32, 34 et respectivement les deux paires d'organes de guidage diamétralement opposées 20, 22. Or, la roue support 14 est équipée d'une pluralité de bobines de fil d'armure et de paires d'organes de guidage correspondantes dans ses deux bordures périphériques opposées 24, 26 comme on l'expliquera dans la suite en référence à la Figure 2. Ensuite, le noyau tubulaire 10 recouvert de la nappe d'armure 12 est adapté à être entraîné en translation longitudinalement par rapport à la roue support 14 selon l'axe de symétrie A et dans la direction D, de la bordure périphérique arrière 26 vers la bordure périphérique avant, grâce à des moyens de traction 36 comportant ici deux chenilles opposées 38, 40, tandis que simultanément, la roue support 14 est entraînée en rotation avec sa pluralité de bobines de fil d'armure et de paires d'organes de guidage correspondantes, de manière à venir enrouler hélicoïdalement les fils d'armure autour du noyau tubulaire 10. Bien évidemment, la roue support 14 définit un plan moyen Pm, et elle est entraînée en rotation dans ce plan, lequel est sensiblement perpendiculaire à la direction d'entraînement du noyau tubulaire 10. Ainsi est formée la nappe d'armure 12. La vitesse de rotation de la roue support 14 et la vitesse d'avancement du conduit tubulaire 10 déterminent la valeur de l'angle α précité et par conséquent la valeur du pas d'hélice des fils d'armure. La valeur de cet angle α est inférieure à 60° et plus précisément inférieure à 55°. Les fils d'armure étant enroulés en appui flancs contre flancs, le pas d'hélice est le même pour tous les fils d'armure.

On se reportera maintenant à la Figure 2, illustrant schématiquement en vue de face agrandie, la roue support 14. On y retrouve le noyau tubulaire 10 recouvert de la nappe d'armure 12 en formation. On retrouve également, diamétralement opposées, les deux paires d'organes de guidage 20, 22 et respectivement les deux fils d'armure 32, 34 qu'elles guident. Par ailleurs, et selon le mode de réalisation illustré sur cette Figure 2, trente-six fils d'armure traversent respectivement trente-six 36 paires d'organes de guidage pour venir s'appliquer ensuite de manière totalement identique aux deux fils d'armure 32, 34 précités, autour du noyau tubulaire 10. On observera que la roue support 14 est entraînée en rotation dans un sens V contraire au sens de rotation des aiguilles d'une montre et que les fils d'armure 32, 34 s'étendent non pas selon une direction radiale comprise dans un plan axial Pa entre les paires d'organes de guidage 20, 22 et le noyau tubulaire 10, mais dans une direction inclinée par rapport à ce plan axial Pa puisque les fils d'armure 32, 34 viennent s'appuyer tangentiellement sur le noyau tubulaire 10.

On se reportera à présent sur la Figure 3, laquelle illustre en détail les différents éléments de la paire d'organes de guidage 22 et son principe de fonctionnement. Tout d'abord, sont représentés sur cette Figure 3, l'axe de symétrie A du noyau tubulaire 10 confondu avec l'axe de rotation de la roue support 14 et le plan axial Pa incluant l'axe de symétrie A. Le sens de rotation V de la roue support est lui aussi représenté. Dans cet exemple, il est contraire au sens de rotation des aiguilles d'une montre. Par ailleurs, on retrouve également sur cette Figure 3, le fil d'armure 34, avec une portion amont 40 située vers sa bobine de fil d'armure 30 correspondante, mais non représentée, et une portion aval 42 orientée vers le noyau tubulaire 10. Le fil d'armure 34 est délivré depuis sa bobine de fil d'armure 30 selon une direction T sensiblement parallèle à l'axe de symétrie A du noyau tubulaire 10 et à distance de ce noyau tubulaire 10, par exemple deux mètres cinquante. Ce fil d'armure 34 présente deux faces opposées, l'une 44 apparaissant sur la Figure, et l'autre 46 en arrière de la Figure, et deux flancs latéraux opposés, l'un 48 apparaissant sur la Figure et l'autre 50 situé en arrière de la Figure. Le fil d'armure 34 est ainsi délivré de manière à ce que ses deux faces opposées 44, 46 soient sensiblement parallèles au plan axial Pa.

La paire d'organes de guidage 22 présente des organes de guidage amont 52, 54, et des organes de guidage aval 56, 58. Ces organes de guidage amont 52, 54 et aval 56, 58 comportent respectivement deux rouleaux amont 52, 54 et deux rouleaux aval 56, 58. Ces rouleaux sont constitués de galets identiques.

Les deux galets amont 52, 54 sont adaptés à être entraînés en rotation autour de leurs axes de rotation amont respectif 60, 62 lesquels sont sensiblement parallèles. Ces deux galets 52, 54 présentent respectivement une bande de roulement 64, 66, et ils sont ajustés à distance l'un de l'autre de façon que leurs bandes de roulement 64, 66 soient espacées l'une de l'autre d'une distance équivalente à l'épaisseur du fil d'armure 34, soit des tranches 48, 50. Sur la Figure 3, les deux galets amont 52, 54 sont espacés l'un de l'autre d'une plus grande distance pour la clarté du dessin. Par ailleurs, les deux axes de rotation amont 60, 62 des deux galets amont 52, 54 sont non seulement parallèles entre eux, mais aussi compris dans un plan sensiblement parallèle au plan moyen Pm de la roue support 14 et par conséquent perpendiculaire à l'axe de rotation A de la roue support 14. De plus, les deux axes de rotation amont 60, 62 sont susceptibles d'être inclinés par rapport au plan axial Pa selon le sens de rotation V d'un angle β compris entre 0 et 180°. Dans le mode de mise en oeuvre présenté sur cette Figure, l'angle β a une valeur proche de 10°, de telle sorte que le fils d'armure 34 en prise entre les deux galets 52, 54 est lui-même incliné de ce même angle β par rapport au plan axial Pa. On expliquera ensuite, l'intérêt d'une telle inclinaison. Les deux galets amont 52, 54 sont entraînés en rotation dans des sens inverse l'un de l'autre par l'intermédiaire du fils d'armure 34 qui lui est entraîné en traction vers les deux galets aval 56, 58 selon une direction R confondue avec la direction T de délivrance du fils d'armure 30, laquelle est sensiblement parallèle à l'axe de symétrie A du noyau tubulaire 10.

Les deux galets avals 56, 58 sont destinés à être entraînés en rotation autour de leurs axes de rotation aval respectifs 68, 70 lesquels sont également parallèles entre eux. Ils présentent respectivement une bande de roulement 72, 74 et ils sont ajustés à distance l'un de l'autre de façon que leurs bandes de roulement 72, 74 soient espacées l'une de l'autre d'une distance, là également, équivalente à l'épaisseur du fils d'armure 34. Les deux axes de rotation aval 68, 70 sont parallèles entre eux, et compris dans un plan sensiblement parallèle au plan moyen Pm de la roue support 14 et aussi perpendiculaire à l'axe de rotation A de la roue support 14. Par ailleurs, le fil d'armure 34 qui s'étend entre les deux paires de galets 52, 54 ; 56, 58, entre selon une direction d'entrée confondue avec les directions T et R du fil d'armure à travers les deux galets aval 56, 58, sur les bandes de roulement 72, 74 desquels viennent respectivement prendre appui les deux faces opposées 44, 46 du fil d'armure 34. Il en ressort selon une direction de sortie S des deux galets aval 56, 58, comprise ici, dans le plan de fléchissement Pf et surtout, inclinée par rapport à la direction R du fil d'armure étendu entre les deux paires de galets 52, 54 ; 56, 58. Le fil d'armure 34 est ainsi fléchi selon une flexion plane dans ce plan de flexion Pf, et il rejoint ensuite selon la direction de sortie S le noyau tubulaire 10 pour venir s'y appliquer tangentiellement. Le plan de flexion Pf contient donc les droites R et S.

L'angle ε est l'angle d'inclinaison du plan de flexion Pf par rapport au plan axial Pa selon le sens de rotation V. Il dépend d'une part du rayon du noyau tubulaire 10 et d'autre part de la distance séparant l'axe de rotation A de la droite R. En pratique, cette distance est de l'ordre de 2,5m et le rayon du noyau tubulaire 10 est de l'ordre de 10 à 30cm, si bien que l'angle ε varie typiquement entre 2° et 7°. L'angle δ est l'angle d'inclinaison des deux axes de rotation aval 68, 70 par rapport au plan axial Pa selon le sens de rotation V. L'angle δ est aussi égal au décalage angulaire des deux faces opposées 44, 46 du fil d'armure 34 entrant et sortant des organes de guidage aval 56, 58 par rapport au plan axial Pa selon le sens de rotation V. L'angle ρ est l'angle d'inclinaison des deux axes de rotation aval 68, 70 par rapport au plan de flexion Pf selon le sens de rotation V. L'angle ρ est aussi égal au décalage angulaire des deux faces opposées 44, 46 du fil d'armure 34 entrant et sortant des organes de guidage aval 56, 58 par rapport au plan de flexion Pf selon le sens de rotation V. Par conséquent, l'angle δ est égal à la somme des angles ε et ρ.

Dans la configuration représentée à la Figure 3, les deux axes de rotation aval 68, 70 sont sensiblement perpendiculaires au plan de flexion Pf contenant la direction R du fils d'armure 34 étendu entre les deux paires de galets 52, 54 ; 56, 58 et qui vient s'appuyer tangentiellement sur le noyau tubulaire 10. Dans ce cas, l'angle ρ est égal à 90°, et l'angle δ est quant à lui typiquement compris entre 92° et 97°. Ainsi, la paire de galets aval 56, 58 est montée réglable comme on l'expliquera ensuite, et elle est ajustée dans une position telle que les axes de rotation 68, 70 des galets soient perpendiculaires au plan de flexion Pf, précisément en fonction de la direction de sortie S du fils d'armure 34 qui définit ce plan de flexion Pf. Car en effet, la méthode selon l'invention vise selon une caractéristique particulièrement avantageuse, à imprimer une flexion plane au fil d'armure 34 selon un plan perpendiculaire à ses deux faces opposées 44, 46 en évitant un fléchissement du fils d'armure 34 selon une composante perpendiculaire, comprise dans un plan parallèle aux faces opposées 44, 46 et perpendiculaire aux flancs du fil. On comprend que l'orientation de la paire de galets aval 56, 58 entre lesquels les deux faces opposées 44, 46 du fil d'armure 34 viennent en prise, permet d'ajuster précisément l'orientation latérale du fils d'armure 34, dans un plan perpendiculaire à la direction R du fil d'armure étendu entre les deux paires de galets 52, 54 ; 56, 58, et par rapport au plan de déformation Pf du fil d'armure 34. Ainsi, on oriente la paire de galets aval 56, 58 dans cette position pour éviter la flexion latérale du fils d'armure 34. Des essais ont montré que ce mode de réalisation de l'invention est adapté à la fabrication de nappes d'armure dont les fils présentent une limité élastique élevée, typiquement plus de 900 MPa.

Selon une variante de réalisation particulièrement avantageuse, et ce notamment lorsque le fil d'armure présente une faible limite élastique, typiquement moins de 600 MPa, on ajuste les axes de rotation 68, 70 des galets aval pour régler lesdits organes de guidage aval 56, 58 de façon que les deux faces opposées du fil d'armure entrant et sortant desdits organes de guidage aval soient décalés angulairement par rapport au plan de flexion Pf selon le sens de rotation V de la roue, d'un angle supérieur à 90°, par exemple 95°. Ceci signifie que l'angle ρ défini plus haut est dans ce cas ajusté à une valeur supérieure à 90°, par exemple supérieure à 95°. Un tel réglage s'obtient en ajustant les axes de rotations 68, 70 des galets selon une direction inclinée de plus de 95° par rapport au plan de flexion Pf selon le sens de rotation V. Des essais ont montré que dans le cas de fils d'armure à faible limite élastique, les meilleurs résultats sont obtenus lorsque l'angle ρ est compris entre 95° et 105°, avantageusement de l'ordre de 100°. Dans ce cas, l'angle δ est typiquement compris entre 97° et 112° en fonction du diamètre du noyau tubuliare 10. Par ailleurs, l'angle δ optimal pour ces fils à basse limite élastique est de l'ordre de 100° à 105°.

On notera que les axes de rotation 68, 70 des galets, sont susceptibles d'être ajustés dans une position angulaire δ comprise par exemple entre 70° et 110°. Les réglages inférieurs à 90° permettent de changer le sens de rotation de la roue support sans avoir à changer les organes de guidage (un angle δ de 105° dans un sens de rotation donné étant par exemple équivalent à un angle de 75° dans le sens de rotation opposé). Le fait que ces valeurs soient relativement proches de 90° permet en outre d'utiliser des galets aval 56, 58 lisses ne présentant pas de gorge pour guider le fil d'armure 34 puisque l'axe de rotation de ces galets est quasiment perpendiculaire (à 20° près) au plan de flexion Pf, si bien que le fil d'armure 34 vient s'appliquer à plat sur ces galets, n'a pas tendance à glisser latéralement le long desdits galets, et ne vient pas non plus en frottement latéral contre leur support qui sera décrit plus loin.

L'angle γ entre les droites R et S est l'angle de fléchissement du fil d'armure 34. Il conditionne l'amplitude de la déformation plastique en fléchissement imprimée au fil d'armure. Cette dernière est également conditionnée par les efforts de traction exercés sur le fil d'armure 34, et aussi par le rayon du galet aval 58 contre lequel est fléchi le fil d'armure 34. Les efforts de traction sont très largement conditionnés par les forces de frottement du fil d'armure entre les paires de galets 52, 54 ; 56, 58, lesquels présentent une intensité de l'ordre de 100 à 300 daN. Une motorisation des galets pourrait permettre une diminution de ces efforts de traction. On observera que l'angle de fléchissement γ pourrait aussi être ajusté en écartant ou en rapprochant radialement la paire de galets aval 56, 58 du noyau tubulaire 10.

Quoi qu'il en soit, il convient d'imprimer une déformation plastique au fil d'armure 34 équivalente à un rayon de courbure correspondant au rayon du cercle osculateur du fil d'armure 34 enroulé autour du noyau tubulaire 10. Plus précisément, il est préférable d'imprimer une déformation plastique d'un rayon de courbure inférieure au rayon du cercle osculateur afin que le fils d'armure enroulé en hélice autour du noyau tubulaire 10 tende à l'enserrer plutôt que ce dernier soit relativement lâche à l'intérieur des pires de la pluralité des fils d'armure. On notera que le rayon du cercle osculateur, ou rayon de courbure du fil d'armure enroulé hélicoïdalement autour du noyau tubulaire 10, varie bien évidement en fonction du diamètre de ce noyau tubulaire et aussi en fonction de l'angle d'enroulement, ou angle d'armage. Typiquement, pour une conduite pétrolière, ce rayon est compris par exemple entre un demi et deux mètres.

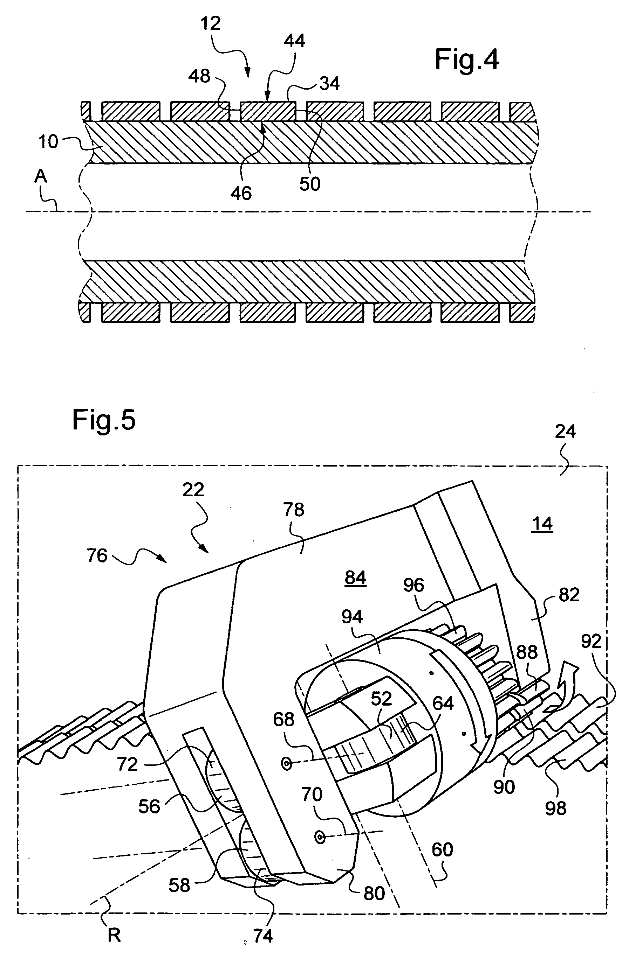

En outre, et ainsi que l'illustre la Figure 3, les axes de rotation amont 60, 62 des galets amont 52, 54 sont sensiblement perpendiculaires aux axes de rotation 68, 70 des galets aval 56, 58. De la sorte, on imprime une déformation plastique en torsion au fil d'armure 34. Grâce à cette déformation plastique en torsion, conjuguée à la flexion plane du fil d'armure 34 précitée, selon un plan de flexion perpendiculaire à ses deux faces opposées 44, 46 qui lui a imprimé une déformation plastique en flexion, en tout point du fil d'armure 34, perpendiculaire aux faces opposées 44, 46, le fil d'armure 34 vient alors s'appliquer à plat sur le noyau tubulaire 10 comme l'illustre la Figure 4.

Cette Figure 4 illustre en coupe axiale le noyau tubulaire 10 recouvert de la nappe d'armure 12. La face interne 46 du fil d'armure 34 est en appui à plat sur le noyau tubulaire 10. Il en aurait été autrement, si le fil d'armure 34 avait été déformé en flexion selon une composante parallèle aux deux faces opposées 44, 46 et perpendiculaire aux flancs 48, 50. Le fil d'armure aurait en effet un bord en appui sur le noyau tubulaire 10 et le bord opposé libre, écarté du noyau tubulaire 10. Cette disposition en « tuile » est un inconvénient du fait des concentrations de contraintes qu'elle engendre. On précisera ici, que le réglage de la position angulaire de la paire de galets aval 56, 58 par rapport à la direction de sortie S du fil d'armure 34 est d'autant plus nécessaire que le fil d'armure présente une basse limite élastique Re, typiquement inférieure à 600 MPa.

On se reportera maintenant à la Figure 5, sur laquelle sont représentés en détail, des moyens de réglage 76 de la position angulaire relative des paires de galets amont 52, 54 et de la paire de galets aval 56, 58. Un seul organe de guidage 22 est ici représenté pour faciliter la description, et apparaît également sur la Figure 5, une portion de bordure 24 de la roue support 14.

Ainsi, ces moyens de réglage 76 comportent tout d'abord une pièce en U formant étrier 78. Cette pièce en U 78 présente deux ailes opposées, une première aile 80 libre et une seconde aile 82 solidaire de la portion de bordure 24 de la roue support 14. Les deux ailes 80, 82 sont reliées ensemble par une partie de fond 84 qui s'étend sensiblement perpendiculairement à la roue support 14 et en particulier de la portion de bordure 24. On retrouve sur cette Figure 5, la direction R du fil d'armure apte à être étendu entre les deux paires de galets 52, 54 ; 56, 58. La première aile 80 libre forme une première chape à l'intérieur de laquelle est installée la paire de galets aval 56, 58. Les axes respectifs de rotation 68,70 et les bandes respectives de roulement 72, 74 des galet aval 56, 58 sont représentés sur la figure 5. Le fil d'armure va précisément être fléchi sur la bande de roulement 74 du galet aval 58.

En outre, la seconde aile 82 présente un arbre non représenté qui s'étend perpendiculairement à la seconde aile 82 et à l'opposé de l'aile libre 80 et qui est monté à rotation à travers un orifice pratiqué dans la portion de bordure périphérique 24. La pièce en U 78 est alors mobile en rotation autour d'un axe confondu avec la direction R du fil d'armure 34.

Par ailleurs, la seconde aile 82 présente une extrémité libre 88 de symétrie hémicirculaire présentant des moyens d'engrènement formés de dents 90 agencées de manière symétrique autour de l'axe de rotation confondu avec la direction R. En outre, les moyens de réglage comprennent également une première roue dentée 92 installée coaxialement et mobile en rotation contre la roue support 14 et de surcroît, qui engrène avec les dents 90 de l'extrémité libre 88. Bien évidemment, cette première roue dentée 92 engrène avec les dents des extrémités libres des secondes ailes de chacune des pièces en U installée de proche en proche dans la portion de bordure périphérique 24. Ainsi, l'entraînement en rotation de la roue dentée 92 par rapport à la roue support 14 permet d'entraîner simultanément en rotation toutes les pièces en U 78, et ainsi de régler l'orientation de la paire de galets aval 56, 58 dans une position telle que représentées sur la Figure 3.

En outre, s'agissant de la paire de galets amont 52, 54, elle est installée sur une couronne support 94 laquelle est montée à rotation sur un prolongement de l'arbre précité qui traverse la seconde aile 82 et qui vient s'étendre entre les deux ailes 80, 82 selon l'axe R du fil d'armure 34. Sur la figure 5, le galet amont 54 n'est pas représenté car il est caché par la pièce en U 78. Par contre, l'axe 60 et la bande de roulement 64 du galet amont 52 sont représentés. La couronne support 94 présente, d'un côté une seconde chape à l'intérieur de laquelle est installée la paire de galets amont 52, 54 et à l'opposé une portion dentée 96 formant une couronne dentée coaxiale au prolongement d'axe R. Par ailleurs la roue support 14 est équipée d'une seconde roue dentée 98 installée coaxialement contre la première roue dentée 92 et mobile en rotation et engrenant avec la portion dentée 96 de la couronne support 94. Là également, cette seconde roue dentée 98 engrène avec les portions dentées de toutes les couronnes support installées sur la pluralité de pièces en U. Ainsi, les roues dentées 92, 98 sont montées réglables en rotation sur la roue support 14 indépendamment l'une de l'autre. Par ailleurs, la couronne support 94 étant elle-même mobile en rotation par rapport à la pièce en U 78, laquelle est également apte à pivoter par rapport à la roue support 14, les entraînements en rotation des roues dentées 92, 98 permettent respectivement de régler la position angulaire de la pièce en U 78 et de la couronne support 94 indépendamment l'une de l'autre. Partant, ces roues dentées 92, 98 permettent de régler l'orientation relative en rotation de la paire de galets amont 52, 54 et de la paire de galet aval 56, 58 autour de l'axe R du fil d'armure 34. Bien qu'ils n'apparaissent pas sur la Figure, le prolongement de l'arbre et l'arbre lui-même cité ci-dessus, sont alésés axialement pour former un chemin de passage afin de permettre le passage du fil d'armure 34 à travers la portion de bordure 24 puis à entre les deux galets amont 52, 54 à la sortie dudit chemin de passage pour qu'il puisse ensuite venir en prise entre les deux galets aval 58, 56 et enfin en ressortir.

Selon une variante de réalisation, on prévoit la mise en oeuvre de courroies crantées pour entraîner simultanément les pièces en U et les couronnes support.

## Revendications

1. Méthode de construction d'une couche (12) de fils d'armures autour d'un noyau tubulaire (10) d'une conduite flexible destinée au transport des hydrocarbures, comprenant les étapes suivantes :
- on fournit un noyau tubulaire (10) de conduite flexible, ledit noyau tubulaire s'étendant longitudinalement selon un axe de symétrie ;
- on fournit une pluralité de fils d'armure (34,32) présentant respectivement deux faces opposées (44, 46) sensiblement parallèles ;
- on fournit une pluralité de paires d'organes de guidage (20, 22) comportant respectivement des organes de guidage amont (52, 54) et des organes de guidage aval réglables (56, 58), chaque fil d'armure étant destiné à être étendu entre lesdits organes de guidage amont et lesdits organes de guidage aval réglables de manière à entrer selon une direction d'entrée (R) à travers lesdits organes de guidage aval (56, 58), lesdits organes de guidage amont et aval étant décalés angulairement les uns par rapport aux autres pour permettre de torsader le fil d'armure (32, 34) ;
- on entraîne en rotation selon un sens de rotation V ladite pluralité de fils d'armure (32, 34) et ladite pluralité de paires d'organes de guidage (20, 22) autour dudit noyau tubulaire (10) et on entraîne simultanément ledit noyau tubulaire en translation de manière à enrouler hélicoïdalement lesdits fils d'armure (32, 34) sur ledit noyau, tandis que chacun desdits fils d'armure est entraîné en translation à travers lesdits organes de guidage (20, 22), lesdits fils d'armure (32, 34) s'étendant respectivement entre les organes de guidage aval (56, 58) et ledit noyau tubulaire (10) selon une direction de sortie (S) desdits organes de guidage aval en provoquant la flexion plane dudit fil d'armure (32, 34) ; ladite direction de sortie (S) étant inclinée par rapport à un plan axial contenant ledit axe de symétrie dudit noyau tubulaire et coupant lesdits organes de guidage aval ; et,
- on règle lesdits organes de guidage aval réglables (56, 58) de façon que les deux faces opposées du fil d'armure entrant et sortant desdits organes de guidage aval soient décalés angulairement par rapport audit plan axial selon ledit sens de rotation V, d'un angle supérieur à 90° pour pouvoir appliquer ledit fil d'armure à plat sur ledit noyau tubulaire.

2. Méthode de construction selon la revendication 1, **caractérisée en ce que**, lesdites directions d'entrée et de sortie définissant un plan de flexion (Pf), on règle lesdits organes de guidage aval réglables (56, 58) de façon que les deux faces opposées du fil d'armure entrant et sortant desdits organes de guidage aval soient décalés angulairement par rapport audit plan de flexion selon ledit sens de rotation V, d'un angle supérieur ou égal à 90°.

3. Méthode de construction selon la revendication 2, **caractérisée en ce qu'**on règle lesdits organes de guidage aval réglables (56, 58) de façon que les deux faces opposées (44, 46) du fil d'armure entrant et sortant desdits organes de guidage aval soient inclinés par rapport audit plan de flexion d'un angle supérieur à 95°.

4. Méthode de construction selon l'une quelconque des revendications 1 à 3, **caractérisée en ce qu'**on fournit en outre des moyens de réglage (78, 92) desdits organes de guidage aval (56, 58).

5. Méthode de construction selon l'une quelconque des revendications 1 à 4, **caractérisée en ce qu'**on guide ledit fil d'armure (32, 34) à travers lesdits organes de guidage aval (56, 58) entre deux premières surfaces de déformation (72, 74) opposées mobiles.

6. Méthode de construction selon l'une quelconque des revendications 1 à 5, **caractérisée en ce qu'**on guide ledit fil d'armure (32, 34) à travers lesdits organes de guidage amont (52, 54) entre deux secondes surfaces de déformation (64, 66) opposées mobiles.

7. Méthode de construction selon la revendication 5 ou 6, **caractérisée en ce que** les surfaces de déformation (64, 66 ; 72, 74) sont circulaires.

8. Méthode de construction selon l'une quelconque des revendications 1 à 7, **caractérisée en ce qu'**on maintient les organes de guidage (20, 22) de ladite pluralité d'organes de guidage en position fixe et espacés les uns des autres autour dudit noyau tubulaire (10).

9. Méthode de construction selon l'une quelconque des revendications 1 à 8, **caractérisée en ce qu'**on monte lesdits organes de guidage amont et aval (52, 54 ; 56, 58) mobiles en rotation les uns par rapport aux autres autour d'un même axe de rotation (R).

10. Méthode de construction selon la revendication 9, **caractérisée en ce qu'**on ajuste lesdits organes de guidage amont et aval (52, 54 ; 56, 58) de façon que ledit même axe de rotation (R) soit orienté sensiblement parallèlement audit noyau tubulaire (10).

11. Méthode de construction selon les revendications 2 et 5, **caractérisée en ce qu'**on incline lesdites premières surfaces de déformation (72, 74) d'un angle supérieur à 90° par rapport audit plan de flexion (Pf).

12. Installation de construction d'une couche (12) de fils d'armures autour d'un noyau tubulaire (10) d'une conduite flexible destinée au transport des hydrocarbures, ledit noyau tubulaire s'étendant longitudinalement selon un axe de symétrie, ladite installation comprenant une roue support (14) présentant un évidement central (18) pour autoriser le passage dudit noyau tubulaire (10) à travers ladite roue, ladite roue (14) comprenant des moyens de stockage (28, 30) pour stocker une pluralité de fils d'armure (32, 34) présentant respectivement deux faces opposées (44, 46) sensiblement parallèles, et une pluralité de paires d'organes de guidage (20, 22) montés autour dudit évidement central (18), lesdites paires d'organes de guidage comportant respectivement des organes de guidage amont (52, 54) et des organes de guidage aval (56, 58), chaque fil d'armure (32, 34) étant destiné à être étendu entre lesdits organes de guidage amont (52, 54) et lesdits organes de guidage aval (56, 58) de manière à entrer selon une direction d'entrée (R) à travers lesdits organes de guidage aval, lesdits organes de guidage amont et aval étant décalés angulairement les uns par rapport aux autres pour permettre de torsader le fil d'armure (32, 34), ledit noyau tubulaire (10) et ladite roue (14) étant destinés à être entraînés simultanément, ledit noyau tubulaire à travers ledit évidement central et ladite roue en rotation autour dudit noyau tubulaire selon un sens de rotation V, de manière à enrouler hélicoïdalement lesdits fils d'armure sur ledit noyau, tandis que chacun desdits fils d'armure (32, 34) est entraîné en translation à travers lesdits organes de guidage (20, 22), lesdits fils d'armure s'étendant respectivement entre les organes de guidage aval (56, 58) et ledit noyau tubulaire (10) selon une direction de sortie (S) desdits organes de guidage aval (56, 58) en provoquant la flexion plane dudit fil d'armure (32, 34), ladite direction de sortie (S) étant inclinée par rapport à un plan axial contenant ledit axe de symétrie dudit noyau tubulaire et coupant lesdits organes de guidage aval ; et,
en ce que ladite roue support (14) comprend en outre des moyens de réglage (78, 92) desdits organes de guidage aval (56, 58) pour régler lesdits organes de guidage aval de façon que les deux faces opposées du fil d'armure entrant et sortant desdits organes de guidage aval soient décalées angulairement par rapport audit plan axial selon ledit sens de rotation V, d'un angle supérieur à 90° pour pouvoir appliquer ledit fil d'armure à plat sur ledit noyau tubulaire.

13. Installation de construction selon la revendication 12, **caractérisée en ce que**, lesdites directions d'entrée et de sortie définissant un plan de flexion (Pf), lesdits moyens de réglage (78, 92) permettent de régler lesdits organes de guidage aval réglables (56, 58) de façon que les deux faces opposées du fil d'armure entrant et sortant desdits organes de guidage aval soient décalés angulairement par rapport audit plan de flexion selon ledit sens de rotation V, d'un angle supérieur ou égal à 90°.

14. Installation de construction selon la revendication 12 ou 13, **caractérisée en ce que** lesdits organes de guidage aval (56, 58) comportent une première paire de premiers galets, lesdits premiers galets présentant des axes (68, 70) parallèles et des premières bandes de roulement (72, 74) en regard, ledit fil d'armure (32, 34) étant destiné à être entraîné en translation entre lesdits premiers galets, lesdites premières bandes de roulement respectivement en appui contre lesdites faces opposées (44, 46).

15. Installation de construction selon l'une quelconque des revendications 12 à 14, **caractérisée en ce que** lesdits organes de guidage amont (52, 54) comportent une seconde paire de seconds galets, lesdits seconds galets présentant des axes parallèles (60, 62) et des secondes bandes de roulement (64, 66) en regard, ledit fil d'armure (32, 34) étant destiné à être entraîné en translation entre lesdits seconds galets, lesdites secondes bandes de roulement respectivement en appui contre lesdites faces opposées (44, 46).

16. Installation selon l'une quelconque des revendications 12 à 15, **caractérisée en ce que** lesdits moyens de réglage comprennent une pièce en U (78) formant étrier, ladite pièce en U présentant deux ailes en regard (80, 82), l'une desdites ailes (82) présentant un arbre qui s'étend sensiblement perpendiculairement auxdites ailes et à l'opposée de l'autre desdites ailes (80), ledit arbre étant monté à rotation sur ladite roue support (14) autour d'un axe (R) perpendiculaire à ladite roue, tandis que lesdits organes de guidage aval (56, 58) sont montés sur l'autre aile (80) desdites ailes.

17. Installation selon la revendication 16, **caractérisée en ce que** ladite pièce en U (78) formant étrier présente un fond (84) reliant desdites ailes (80, 82), ladite une desdites ailes (82) présentant une extrémité libre (88) opposée audit fond, ladite extrémité libre présentant des moyens d'engrènement (90) pour entraîner ladite pièce en U en pivotement autour dudit arbre.

18. Installation selon la revendication 17, **caractérisée en ce que** lesdits moyens de réglage comprennent en outre une roue dentée (92) montée coaxialement mobile en rotation contre ladite roue support (14), et **en ce que** ladite roue dentée présente des dents aptes à coopérer avec lesdits moyens d'engrènement (90) de ladite extrémité libre (88) de ladite une desdites ailes.

19. Installation selon la revendication 17 ou 18, **caractérisée en ce que** ladite pièce en U (78) est installée sur ladite roue support (14) de façon que ladite extrémité libre (88) soit orientée vers le centre de ladite roue.

20. Installation selon l'une quelconque des revendications 16 à 19, **caractérisée en ce que en ce que** ledit arbre présente un prolongement qui traverse ladite une desdites ailes (82) et qui s'étend à l'intérieur de ladite pièce en U (78) vers ladite autre aile (80), et **en ce que** lesdits organes de guidage amont (52, 54) sont montés à rotation sur ledit prolongement en regard desdits organes de guidage aval (56, 58).

21. Installation selon la revendication 20, **caractérisée en ce que** lesdits organes de guidage amont (52, 54) sont équipés d'une couronne dentée (96) montée coaxialement sur ledit prolongement pour commander l'inclinaison desdits organes de guidage amont.

22. Installation selon la revendication 21, **caractérisée en ce que** ladite roue support (14) comprend une autre roue dentée (98) montée coaxialement mobile en rotation sur ladite roue support, ladite autre roue dentée étant adaptée à engrener ladite couronne dentée (96).

23. Installation selon l'une quelconque des revendications 20 à 22, **caractérisée en ce que** ledit arbre et ledit prolongement présente un alésage axial pour former un chemin de passage dudit fil d'armure (32, 34).

## Claims

1. A method for constructing a layer (12) of armor strips around a tubular core (10) of a flexible pipe designed for transporting hydrocarbons, comprising the following steps:
- a tubular core (10) of a flexible pipe is supplied, said tubular core extending longitudinally along an axis of symmetry;
- a plurality of armor strips (34, 32) is supplied having respectively two substantially parallel opposite faces (44, 46);
- a plurality of pairs of guide members (20, 22) is supplied comprising respectively upstream guide members (52, 54) and adjustable downstream guide members (56, 58), each armor strip being designed to be stretched between said upstream guide members and said adjustable downstream guide members so as to enter in an entry direction (R) through said downstream guide members (56, 58), said upstream and downstream guide members being offset angularly relative to one another in order to make it possible to twist the armor strip (32, 34);
- said plurality of armor strips (32, 34) and said plurality of pairs of guide members (20, 22) are rotated in a direction of rotation V around said tubular core (10) and said tubular core is simultaneously driven in translation so as to helically wind said armor strips (32, 34) onto said core, while each of said armor strips is driven in translation through said guide members (20, 22), said armor strips (32, 34) stretching respectively between the downstream guide members (56, 58) and said tubular core (10) in a direction (S) for exiting said downstream guide members while causing the flat bending of said armor strip (32, 34); said exit direction (S) being inclined relative to an axial plane containing said axis of symmetry of said tubular core and intersecting said downstream guide members; and,
- said adjustable downstream guide members (56, 58) are adjusted so that the two opposite faces of the armor strip entering and exiting said downstream guide members are offset angularly relative to said axial plane in said direction of rotation V, by an angle greater than 90° in order to be able to press said armor strip flat on said tubular core.

2. The construction method as claimed in claim 1, **characterized in that**, said entry and exit directions defining a bending plane (Pf), said adjustable downstream guide members (56, 58) are adjusted so that the two opposite faces of the armor strip entering and exiting said downstream guide members are offset angularly relative to said bending plane in said direction of rotation V, by an angle greater than or equal to 90°.

3. The construction method as claimed in claim 2, **characterized in that** said adjustable downstream guide members (56, 58) are adjusted so that the two opposite faces (44, 46) of the armor strip entering and exiting said downstream guide members are inclined relative to said bending plane by an angle greater than 95°.

4. The construction method as claimed in any one of claims 1 to 3, **characterized in that** means (78, 92) for adjusting said downstream guide members (56, 58) are also supplied.

5. The construction method as claimed in any one of claims 1 to 4, **characterized in that** said armor strip (32, 34) is guided through said downstream guide members (56, 58) between two first mobile, opposite deformation surfaces (72, 74).

6. The construction method as claimed in any one of claims 1 to 5, **characterized in that** said armor strip (32, 34) is guided through said upstream guide members (52, 54) between two second mobile, opposite deformation surfaces (64, 66).

7. The construction method as claimed in claim 5 or 6, **characterized in that** the deformation surfaces (64, 66; 72, 74) are circular.

8. The construction method as claimed in any one of claims 1 to 7, **characterized in that** the guide members (20, 22) of said plurality of guide members are held in a fixed position and spaced from one another around said tubular core (10).

9. The construction method as claimed in any one of claims 1 to 8, **characterized in that** said upstream and downstream guide members (52, 54; 56, 58) are mounted so as to be able to rotate relative to one another about one and the same axis of rotation (R).

10. The construction method as claimed in claim 9, **characterized in that** said upstream and downstream guide members (52, 54; 56, 58) are adjusted so that said one and the same axis of rotation (R) is oriented substantially parallel to said tubular core (10).

11. The construction method as claimed in claims 2 and 5, **characterized in that** said first deformation surfaces (72, 74) are inclined at an angle greater than 90° relative to said bending plane (Pf).

12. An installation for constructing a layer (12) of armor strips around a tubular core (10) of a flexible pipe designed for transporting hydrocarbons, said tubular core stretching longitudinally along an axis of symmetry, said installation comprising a supporting wheel (14) having a central recess (18) in order to allow said tubular core (10) to pass through said wheel, said wheel (14) comprising storage means (28, 30) for storing a plurality of armor strips (32, 34) having respectively two substantially parallel opposite faces (44, 46), and a plurality of pairs of guide members (20, 22) mounted around said central recess (18), said pairs of guide members comprising respectively upstream guide members (52, 54) and downstream guide members (56, 58), each armor strip (32, 34) being designed to be stretched between said upstream guide members (52, 54) and said downstream guide members (56, 58) so as to enter in an entry direction (R) through said downstream guide members, said upstream and downstream guide members being offset angularly relative to one another in order to make it possible to twist the armor strip (32, 34), said tubular core (10) and said wheel (14) being designed to be driven simultaneously, said tubular core through said central recess and said wheel in rotation about said tubular core in a direction of rotation V, so as to helically wind said armor strips onto said core, while each of said armor strips (32, 34) is driven in translation through said guide members (20, 22), said armor strips stretching respectively between the downstream guide members (56, 58) and said tubular core (10) in a direction (S) for exiting said downstream guide members (56, 58) while causing the flat bending of said armor strip (32, 34), said exit direction (S) being inclined relative to an axial plane containing said axis of symmetry of said tubular core and intersecting said downstream guide members; and,
in that said supporting wheel (14) also comprises means (78, 92) for adjusting said downstream guide members (56, 58) in order to adjust said downstream guide members so that the two opposite faces of the armor strip entering and exiting said downstream guide members are offset angularly relative to said axial plane in said direction of rotation V, by an angle greater than 90° in order to be able to press said armor strip flat on said tubular core.

13. The construction installation as claimed in claim 12, **characterized in that**, said entry and exit directions defining a bending plane (Pf), said adjustment means (78, 92) make it possible to adjust said adjustable downstream guide members (56, 58) so that the two opposite faces of the armor strip entering and exiting said downstream guide members are offset angularly relative to said bending plane in said direction of rotation V, by an angle greater than or equal to 90°.

14. The construction installation as claimed in claim 12 or 13, **characterized in that** said downstream guide members (56, 58) comprise a first pair of first rollers, said first rollers having parallel axes (68, 70) and first facing roll bands (72, 74), said armor strip (32, 34) being designed to be driven in translation between said first rollers, said first roll bands respectively pressing against said opposite faces (44, 46).

15. The construction installation as claimed in any one of claims 12 to 14, **characterized in that** said upstream guide members (52, 54) comprise a second pair of second rollers, said second rollers having parallel axes (60, 62) and second facing roll bands (64, 66), said armor strip (32, 34) being designed to be driven in translation between said second rollers, said second roll bands respectively pressing against said opposite faces (44, 46).

16. The installation as claimed in any one of claims 12 to 15, **characterized in that** said adjustment means comprise a U-shaped part (78) forming a yoke, said U-shaped part having two facing flanges (80, 82), one of said flanges (82) having a shaft which extends substantially perpendicularly to said flanges and away from the other of said flanges (80), said shaft being mounted rotatably on said supporting wheel (14) about an axis (R) perpendicular to said wheel, while said downstream guide members (56, 58) are mounted on the other flange (80) of said flanges.

17. The installation as claimed in claim 16, **characterized in that** said U-shaped part (78) forming a yoke has a web (84) connecting said flanges (80, 82), said one of said flanges (82) having a free end (88) opposite to said web, said free end having meshing means (90) in order to drive said U-shaped part to pivot about said shaft.

18. The installation as claimed in claim 17, **characterized in that** said adjustment means also comprise a gearwheel (92) mounted coaxially and moveable in rotation against said supporting wheel (14), and **in that** said gearwheel has teeth capable of interacting with said meshing means (90) of said free end (88) of said one of said flanges.

19. The installation as claimed in claim 17 or 18, **characterized in that** said U-shaped part (78) is installed on said supporting wheel (14) so that said free end (88) is oriented toward the center of said wheel.

20. The installation as claimed in any one of claims 16 to 19, **characterized in that** said shaft has an extension which passes through said one of said flanges (82) and which extends inside said U-shaped part (78) toward said other flange (80), and **in that** said upstream guide members (52, 54) are mounted rotatably on said extension facing said downstream guide members (56, 58).

21. The installation as claimed in claim 20, **characterized in that** said upstream guide members (52, 54) are fitted with a ring gear (96) mounted coaxially on said extension in order to control the inclination of said upstream guide members.

22. The installation as claimed in claim 21, **characterized in that** said supporting wheel (14) comprises another gearwheel (98) mounted coaxially and moveable in rotation on said supporting wheel, said other gearwheel being suitable for meshing said ring gear (96).

23. The installation as claimed in any one of claims 20 to 22, **characterized in that** said shaft and said extension have an axial bore in order to form a path for said armor strip (32, 34) to pass through.

## Patentansprüche

1. Verfahren zur Herstellung einer Schicht (12) aus Bewehrungsstreifen um einen röhrenförmigen Kern (10) einer flexiblen Rohrleitung, die für den Transport von Kohlenwasserstoffen bestimmt ist, umfassend die folgenden Schritte:
- ein röhrenförmiger Kern (10) einer flexiblen Rohrleitung wird bereitgestellt, wobei der röhrenförmige Kern sich entlang einer Symmetrieachse in Längsrichtung erstreckt;
- eine Vielzahl von Bewehrungsstreifen (34, 42) wird bereitgestellt, die jeweils zwei entgegengesetzte im Wesentlichen parallele Flächen (44, 46) aufweisen;
- eine Vielzahl von Paaren von Führungsorganen (20, 22) wird bereitgestellt, die jeweils vordere Führungsorgane (52, 54) und verstellbare hintere Führungsorgane (56, 58) aufweisen, wobei jeder Bewehrungsstreifen dafür vorgesehen ist, zwischen den vorderen Führungsorganen und den verstellbaren hinteren Führungsstreifen derart gespannt zu werden, dass er in einer Eintrittsrichtung (R) durch die hinteren Führungsorgane (56, 58) hindurch eintritt, wobei die vorderen und die hinteren Führungsorgane winklig zueinander versetzt sind, um das Verdrillen des Bewehrungsstreifens (32, 34) zu ermöglichen;
- die Vielzahl von Bewehrungsstreifen (32, 34) und die Vielzahl von Paaren von Führungsorganen (20, 22) werden um den röhrenförmigen Kern (10) herum in einer Drehrichtung V zur Drehung angetrieben und gleichzeitig wird der röhrenförmige Kern derart zur Verschiebung angetrieben, dass die Bewehrungsstreifen (32, 34) spiralförmig auf den Kern aufgewickelt werden, während jeder der Bewehrungsstreifen zur Verschiebung durch die Führungsorgane (20, 22) hindurch angetrieben wird, wobei die Bewehrungsstreifen (32, 34) sich jeweils zwischen den hinteren Führungsorganen (56, 58) und dem röhrenförmigen Kern (10) in einer Austrittsrichtung (S) aus den hinteren Führungsorganen erstrecken, indem die flache Biegung des Bewehrungsstreifens (32, 34) bewirkt wird; wobei die Austrittsrichtung (S) relativ zu einer axialen Ebene geneigt ist, welche die Symmetrieachse des röhrenförmigen Kerns enthält und die hinteren Führungsorgane schneidet,
- und die verstellbaren hinteren Führungsorgane (56, 58) werden derart verstellt, dass die zwei entgegengesetzten Flächen des eintretenden und aus den hinteren Führungsorganen austretenden Bewehrungsstreifens winklig relativ zu der axialen Ebene in einer Rotationsrichtung V um einen Winkel versetzt sind, der größer als 90° ist, um den Bewehrungsstreifen flach auf den röhrenförmigen Kern aufzubringen.

2. Herstellungsverfahren nach Anspruch 1, **dadurch gekennzeichnet, dass**, da die Eintritts- und die Austrittsrichtung eine Biegungsebene (Pf) bilden, die verstellbaren hinteren Führungsorgane (56, 58) so verstellt werden, dass die zwei entgegengesetzten Flächen des eintretenden und aus den hinteren Führungsorganen austretenden Bewehrungsstreifens winklig relativ zu der Biegungsebene in einer Rotationsrichtung V um einen Winkel versetzt sind, der größer oder gleich 90° ist.

3. Herstellungsverfahren nach Anspruch 2, **dadurch gekennzeichnet, dass** die verstellbaren hinteren Führungsorgane (56, 58) so verstellt werden, dass die zwei entgegengesetzten Flächen (44, 46) des eintretenden und aus den hinteren Führungsorganen austretenden Bewehrungsstreifens relativ zu der Biegungsebene um einen Winkel geneigt sind, der größer als 95° ist.

4. Herstellungsverfahren nach einem der Ansprüche 1 bis 3, **dadurch gekennzeichnet, dass** ferner Mittel zum Verstellen (78, 92) der hinteren Führungsorgane (56, 58) bereitgestellt werden.

5. Herstellungsverfahren nach einem der Ansprüche 1 bis 4, **dadurch gekennzeichnet, dass** der Bewehrungsstreifen (32, 34) durch die hinteren Führungsorgane (56, 58) hindurch zwischen zwei ersten beweglichen entgegengesetzten Verformungsflächen (72, 74) geführt wird.

6. Herstellungsverfahren nach einem der Ansprüche 1 bis 5, **dadurch gekennzeichnet, dass** der Bewehrungsstreifen (32, 34) durch die vorderen Führungsorgane (52, 54) hindurch zwischen zwei zweiten beweglichen entgegengesetzten Verformungsflächen (64, 66) geführt wird.

7. Herstellungsverfahren nach Anspruch 5 oder Anspruch 6, **dadurch gekennzeichnet, dass** die Verformungsmittel (64, 66; 72, 74) kreisförmig sind.

8. Herstellungsverfahren nach einem der Ansprüche 1 bis 7, **dadurch gekennzeichnet, dass** die Führungsorgane (20, 22) der Vielzahl von Führungsorganen in fester Position und voneinander beabstandet um den röhrenförmigen Kern (10) herum gehalten werden.

9. Herstellungsverfahren nach einem der Ansprüche 1 bis 8, **dadurch gekennzeichnet, dass** die vorderen und hinteren Führungsorgane (52, 54; 56, 58) drehbeweglich zueinander um ein und dieselbe Rotationsachse (R) herum gelagert werden.

10. Herstellungsverfahren nach Anspruch 9, **dadurch gekennzeichnet, dass** die vorderen und hinteren Führungsorgane (52, 54; 56, 58) derart eingestellt werden, dass dieselbe Rotationsachse (R) im Wesentlichen parallel zu dem röhrenförmigen Kern (10) ausgerichtet ist.

11. Herstellungsverfahren nach Anspruch 2 und Anspruch 5, **dadurch gekennzeichnet, dass** die ersten Verformungsflächen (72, 74) relativ zu der Biegungsebene (Pf) um einen Winkel geneigt werden, der größer als 90° ist.

12. Anlage zur Herstellung einer Schicht (12) aus Bewehrungsstreifen um einen röhrenförmigen Kern (10) einer flexiblen Rohrleitung, die für den Transport von Kohlenwasserstoffen bestimmt ist, wobei der röhrenförmige Kern sich entlang einer Symmetrieachse in Längsrichtung erstreckt, wobei die Anlage ein Trägerrad (14) umfasst, das eine mittige Ausnehmung (18) aufweist, um den Durchtritt des röhrenförmigen Kerns (10) durch das Rad hindurch zu ermöglichen, wobei das Rad (14) Speichermittel (28, 30) umfasst, um eine Vielzahl von Bewehrungsstreifen (32, 34) zu speichern, die jeweils zwei entgegengesetzte im Wesentlichen parallele Flächen (44, 46) aufweisen, und eine Vielzahl von Paaren von Führungsorganen (20, 22), die um die mittige Ausnehmung (18) herum gelagert sind, wobei die Paare von Führungsorganen jeweils vordere Führungsorgane (52, 54) und hintere Führungsorgane (56, 58) aufweisen, wobei jeder Bewehrungsstreifen (32, 34) dafür vorgesehen ist, zwischen den vorderen Führungsorganen (52, 54) und den hinteren Führungsstreifen (56, 58) derart gespannt zu werden, dass er in einer Eintrittsrichtung (R) durch die hinteren Führungsorgane hindurch eintritt, wobei die vorderen und die hinteren Führungsorgane winklig zueinander versetzt sind, um das Verdrillen des Bewehrungsstreifens (32, 34) zu ermöglichen, wobei der röhrenförmige Kern (10) und das Rad (14) dafür vorgesehen sind, gleichzeitig angetrieben zu werden, der röhrenförmige Kern durch die mittige Ausnehmung hindurch und das Rad in einer Rotationsrichtung (V) um den röhrenförmigen Kern herum, derart, dass die Bewehrungsstreifen spiralförmig auf den Kern aufgewickelt werden, während jeder der Bewehrungsstreifen (32, 34) zur Verschiebung durch die Führungsorgane (20, 22) hindurch angetrieben wird, wobei die Bewehrungsstreifen sich jeweils zwischen den hinteren Führungsorganen (56, 58) und dem röhrenförmigen Kern (10) in einer Austrittsrichtung (S) aus den hinteren Führungsorganen (56, 58) erstreckt, indem er die flache Biegung des Bewehrungsstreifens (32, 34) bewirkt; wobei die Austrittsrichtung (S) relativ zu einer axialen Ebene geneigt ist, welche die Symmetrieachse des röhrenförmigen Kerns enthält und die hinteren Führungsorgane schneidet; und dass das Trägerrad (14) ferner Mittel zum Verstellen (78, 92) der hinteren Führungsorgane (56, 58) umfasst, um die hinteren Führungsorgane so zu verstellen, dass die zwei entgegengesetzten Flächen des eintretenden und aus den hinteren Führungsorganen austretenden Bewehrungsstreifens winklig relativ zu der axialen Ebene in der Rotationsrichtung V um einen Winkel versetzt sind, der größer als 90° ist, um den Bewehrungsstreifen flach auf den röhrenförmigen Kern aufzubringen.

13. Anlage zur Herstellung nach Anspruch 12, **dadurch gekennzeichnet, dass**, da die Eintritts- und die Austrittsrichtung eine Biegungsebene (Pf) bilden, die Verstellmittel (78, 92) es ermöglichen, die verstellbaren hinteren Führungsorgane (56, 58) so zu verstellen, dass die zwei entgegengesetzten Flächen des eintretenden und aus den hinteren Führungsorganen austretenden Bewehrungsstreifens winklig relativ zu der Biegungsebene in der Rotationsrichtung V um einen Winkel versetzt sind, der größer oder gleich 90° ist.

14. Anlage zur Herstellung nach Anspruch 12 oder Anspruch 13, **dadurch gekennzeichnet, dass** die hinteren Führungsorgane (56, 58) ein erstes Paar erster Rollen aufweisen, wobei die ersten Rollen parallele Achsen (68, 70) und erste gegenüberliegende Laufflächen (72, 74) aufweisen, wobei der Bewehrungsstreifen (32, 34) dafür vorgesehen ist, zur Verschiebung zwischen den ersten Rollen angetrieben zu werden, wobei die ersten Laufflächen jeweils gegen die entgegengesetzten Flächen (44, 46) anliegen.

15. Anlage zur Herstellung nach einem der Ansprüche 12 bis 14, **dadurch gekennzeichnet, dass** die vorderen Führungsorgane (52, 54) ein zweites Paar zweiter Rollen aufweisen, wobei die zweiten Rollen parallele Achsen (60, 62) und zweite gegenüberliegende Laufflächen (64, 66) aufweisen, wobei der Bewehrungsstreifen (32, 34) dafür vorgesehen ist, zur Verschiebung zwischen den zweiten Rollen angetrieben zu werden, wobei die zweiten Laufflächen jeweils gegen die entgegengesetzten Flächen (44, 46) anliegen.

16. Anlage nach einem der Ansprüche 12 bis 15, **dadurch gekennzeichnet, dass** die Verstellmittel ein U-förmiges Teil (78) umfassen, das einen Bügel bildet, wobei das U-förmige Teil zwei gegenüberliegende Flügel (80, 82) aufweist, wobei einer der Flügel (82) eine Welle aufweist, die sich im Wesentlichen senkrecht zu den Flügeln und entgegengesetzt zu dem anderen der Flügel (80) erstreckt, wobei die Welle auf der Trägerwelle (14) drehbeweglich um eine zu dem Rad senkrechte Achse (R) gelagert ist, während die hinteren Führungsorgane (56, 68) auf dem anderen Flügel (80) der Flügel gelagert sind.

17. Anlage nach Anspruch 16, **dadurch gekennzeichnet, dass** das einen Bügel bildende U-förmige Teil (78) einen Boden (84) aufweist, der die Flügel (80, 82) verbindet. wobei der eine der Flügel (82) ein freies Ende (88) aufweist, das dem Boden entgegengesetzt ist, wobei das freie Ende Eingriffsmittel (90) aufweist, um das U-förmige Teil zur Drehung um die Welle anzutreiben.

18. Anlage nach Anspruch 17, **dadurch gekennzeichnet, dass** die Verstellmittel ferner ein Zahnrad (92) umfassen, das in koaxialer Richtung drehbeweglich gegen das Trägerrad (14) gelagert ist, und dass das Zahnrad Zähne aufweist, die dazu geeignet sind, mit den Eingriffsmitteln (90) des freien Endes (88) des einen der Flügel zusammenzuwirken.

19. Anlage nach Anspruch 17 oder 18, **dadurch gekennzeichnet, dass** das U-förmige Teil (78) auf dem Trägerrad (14) derart gelagert ist, dass das freie Ende (88) in Richtung der Mitte des Rads ausgerichtet ist.

20. Anlage nach einem der Ansprüche 16 bis 19, **dadurch gekennzeichnet, dass** die Welle eine Verlängerung aufweist, die einen der Flügel (82) durchsetzt und sich im Innern des U-förmigen Teils (78) in Richtung des anderen Flügels (80) erstreckt, und dass die vorderen Führungsorgane (52, 54) auf der Verlängerung den hinteren Führungsorganen (56, 58) gegenüber drehbeweglich gelagert sind.

21. Anlage nach Anspruch 20, **dadurch gekennzeichnet, dass** die vorderen Führungsorgane (52, 54) mit einem Zahnkranz (96) versehen sind, der in koaxialer Richtung auf der Verlängerung gelagert ist, um die Neigung der vorderen Führungsorgane zu steuern.

22. Anlage nach Anspruch 21, **dadurch gekennzeichnet, dass** das Trägerrad (14) ein weiteres Zahnrad (98) umfasst, das in koaxialer Richtung drehbeweglich auf dem Trägerrad gelagert ist, wobei das Zahnrad dazu geeignet ist, mit dem Zahnkranz (98) in Eingriff zu kommen.

23. Anlage nach einem der Ansprüche 20 bis 22, **dadurch gekennzeichnet, dass** die Welle und die Verlängerung eine axiale Bohrung aufweisen, um einen Durchgangsweg für den Bewehrungsstreifen (32, 34) zu bilden.
